# EUROPEAN PATENT SPECIFICATION

(11) **EP 1 329 282 B1**
(45) Date of publication and mention of the grant of the patent: **12.11.2008**
(21) Application number: 01967688.1
(22) Date of filing: 14.09.2001
(51) Int. Cl.: B23Q 1/01

(54) **MACHINE TOOL**
WERKZEUGMASCHINE
MACHINE-OUTIL

(30) Priority: 12.10.2000 JP 2000311916
(43) Date of publication of application: 23.07.2003
(73) Proprietor: Horkos Corp, Fukuyama-shi, Hiroshima-ken 720-0831 (JP)
(72) Inventor: SUGATA, Shinsuke, Fukuyama-shi, Hiroshima 720-0831 (JP); SEO, Yoshihide, Fukayasu-gun, Hiroshima 720-2124 (JP)
(74) Representative: Kramer - Barske - Schmidtchen
(86) International application number: PCT/JP2001/008026
(87) International publication number: WO 2002/030616

(56) References cited:
- EP-A- 0 893 196
- WO-A-01/02132
- JP-A- 4 365 529
- JP-A- 2000 024 853
- JP-A- 2001 009 652
- JP-U- 62 144 133
- US-A- 5 933 933

## Description

### FIELD OF THE INVENTION

The present invention relates to a machine tool increasing in position stability of a spindle.

### BACKGROUND OF THE INVENTION

A machine tool capable of shortening the length of spindle direction (longitudinal direction) of a first saddle, a second saddle and a column as well as speeding up the longitudinal feed of a spindle head, wherein the column is fixedly on a bed, the first saddle is movably guided by the column in vertical direction, the second saddle is movably guided by the first saddle in lateral direction, and the spindle head is movably guided by the second saddle in longitudinal direction, has been known (See Japanese Patent Provisional Publication No. 365529 of 1992, for example).

In this machine tool, when the first saddle and the second saddle are moved in vertical and lateral direction or when the spindle head is moved in longitudinal direction, the second saddle is hard to attempt the position stability. Unless the second saddle has sufficient position stability, there occurs the problem that a spindle vibrates and working can not be carried out high-accurately.

JP 2000-24853A discloses a machine tool with a bed and a column movable on the bed. A saddle is movable in a vertical direction on the column.

US 5,933,933 discloses a machine tool wherein a first saddle is movable in lateral direction and a second saddle is movable in vertical direction. Guide route means for guiding the second saddle are provided on the upper and lower front of the first saddle and on the outer sides of the first saddle.

EP 0 893 196 A2 discloses a machine tool with guide route means for guiding a first saddle in lateral direction on the upper and lower sides of the first saddle and guide route means for guiding a second saddle in vertical direction on the upper and lower inner sides of the first saddle.

WO 01/02132 A1, which is an Article 54(3) EPC document, discloses a further machine tool.

The present invention aims to provide a machine tool that can settle the problem.

This object is achieved by a machine tool according to claim 1.

Further developments of the invention are given in the dependent claims.

In the machine tool, a column is fixedly installed on a bed, a first saddle is movably guided by the column in vertical direction, a second saddle is movably guided by the first saddle in lateral direction, a spindle head is movably guided by the second saddle in longitudinal direction, and guide route means for guiding the second saddle in lateral direction are formed at the rear upper and lower positions of the first saddle or at either thereof as well as at the front upper and lower positions of the first saddle.

According to this, the first saddle guides the second saddle through at least three guide route means. Besides, two opposite guide route means in longitudinal direction among these have longitudinal floating regulated by the second saddle part therebetween strictly. Therefore, the second saddle can secure position stability at an optional position in the lateral moving range thereof.

Preferably, the machine tool is constituted so that the column is fixedly installed on the bed, the first saddle is movably guided by the column in vertical direction, the second saddle is movably guided by the first saddle in lateral direction, the spindle head is movably guided by the second saddle in longitudinal direction, and guide route means for guiding the second saddle in lateral direction are formed at the rear lower position of the first saddle as well as at the front upper and lower positions of the first saddle.

According to this, when the bottom of the second saddle is reinforced as a spindle head supporting member, the supporting member effectively contributes as a support structure of two guide route means at the lower position of the first saddle and transmits floating control force of two guide route means to the second saddle.

Preferably, the guide route means comprise route members and interfitting members that slidably move with fitted in the route members. In this case, the route members are fixed on the first saddle or the second saddle. Besides, the interfitting members are fixed on the second saddle when the route members are fixed on the first saddle, and on the first saddle when the route member are fixed on the second saddle as well.

According to this, the guide route means are easily formed by well-known means, and the route members and the interfitting members can relatively slide on the first saddle to the second saddle in the state where floating is controlled.

Preferably, the guide route means for guiding the second saddle in lateral direction comprises the route members and the interfitting members that slidably move with fitted in the route members. The route members are fixed on the front upper and lower positions of the first saddle and a plurality of interfitting members fixed on the second saddle are fitted in the route members. Besides, the route members is fixed on the rear lower position of the first saddle and the singular or plural interfitting members fixed on the second saddle are fitted in the route members.

According to this, the second saddle effectively and simply increases in position stability without accompanying with enlargement of the whole construction.

Embodiments of the invention will be described with reference to the drawings, of which:

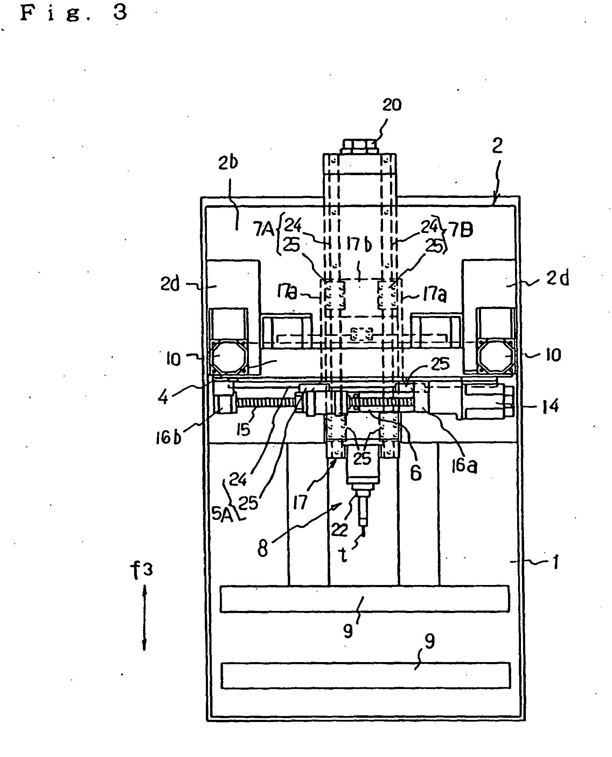

Fig. 1 is a side view of a machine tool concerning the first embodiment of the invention, Fig. 2 is a front view thereof, and Fig. 3 is a plan view thereof,
Fig. 4 is a perspective view of an important part of the machine tool, Fig. 5 is a sectional view taken on line X - X in Fig. 2 at a side sight, showing an important part of the machine tool,
Fig. 6 illustrates guide route means of the machine tool, Fig. 6A is a perspective view, and Fig. 6B is a sectional view taken on line X1 - X1, and
Fig. 7 is an operating explanatory view showing the state that a spindle head of the machine tool is moved to the forefront within a movable range to the second saddle.

In an embodiment, a machine tool comprises a bed 1 forming the lowest part, a column 2 fixed on the upper surface of the bed 1, a first saddle 4 slidably-movably guided in vertical direction f1 through a pair of vertical guide route means 3A, 3B provided to the front surface of the column 2, a second saddle 6 slidably-movably guided in lateral direction f2 through a pair of lateral guide route means 5A, 5B, 5C provided to three positions of the front upper and lower positions and the rear lower position of the first saddle 4, and a spindle head 8 slidably-movably guided in longitudinal direction f3 through a pair of longitudinal guide route means 7A, 7B provided to the second saddle 6.

An explanation follows about the above-mentioned components.

The bed 1 is formed into a box structure out of steel plates. Supporting members 9, 9 for fixing a not-illustrated worktable are fixed on the top of the bed 1 in front of the column 2.

The column 2 comprises one pair of right and left vertical parts 2a, 2a and one pair of upper and lower lateral parts 2b, 2b, consisting chiefly of a rectangular frame body having a comparative large space "a" on the central inside. Motor-tables 2d, 2d are provided on right and left ends of the upper lateral part 2b.

Servomotors 10, 10 for vertically driving the first saddle 4 are fixed on the motor-tables 2d, 2d. Bearing members 12a, 12b for rotatively supporting vertical screw axes 11, 11 are fixed on the front right and left positions of the right and left vertical parts 2a, 2a and near the servomotors 10, 10, respectively. Here, the vertical screw axes 11, 11 combine with output axes of the servomotors 10, 10.

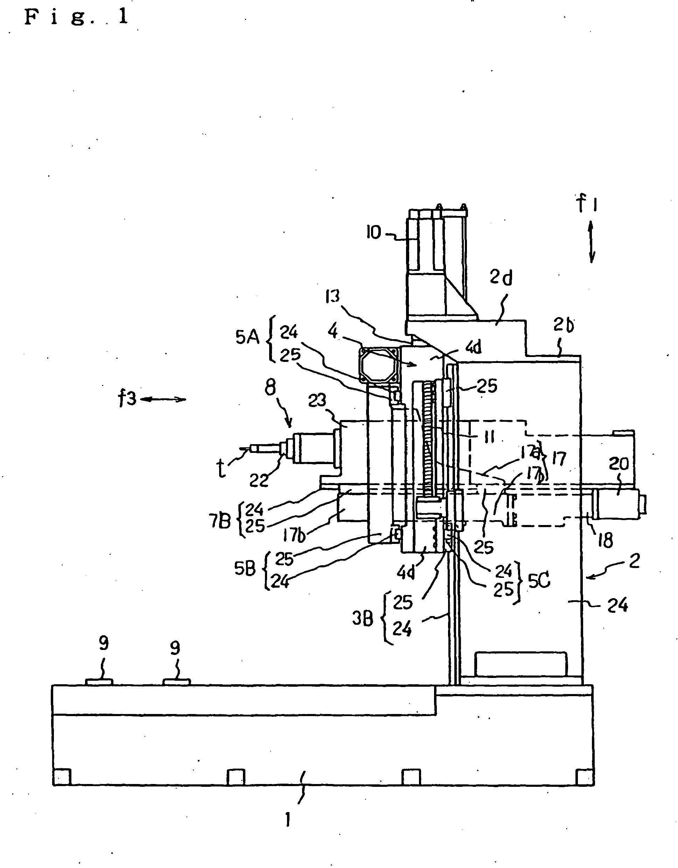

The first saddle 4, as shown in Figs. 1, 2, 4, comprises one pair of right and left lateral parts 4a, 4b each having a rectangular cross-section and one pair of upper and lower vertical parts 4c, 4c each having a rectangular cross-section, consisting chiefly of a rectangular frame body made of fettling steel having a comparative large longitudinal space "b" on its central inside. In this case, the size of the first saddle 4 at front sight is accepted in the front of the column 2 and projections 4d, 4d are provided to the rear upper and lower positions backwardly as shown in Fig. 1. Besides, nut bodies 13, 13 for being inserted into the vertical screw axes 11, 11 are fixed on the right and left ends of the upper projection 4d.

A servomotor 14 for laterally driving the second saddle 6 is fixed on the front right end part of the upper lateral part 4a. Bearing members 16a, 16b for rotatively supporting a lateral screw axis 15 are fixed on the front left end part of the lateral part 4a and near the servomotor 14. Here, the lateral screw axis 15 combines with an output axis of the servomotor 14.

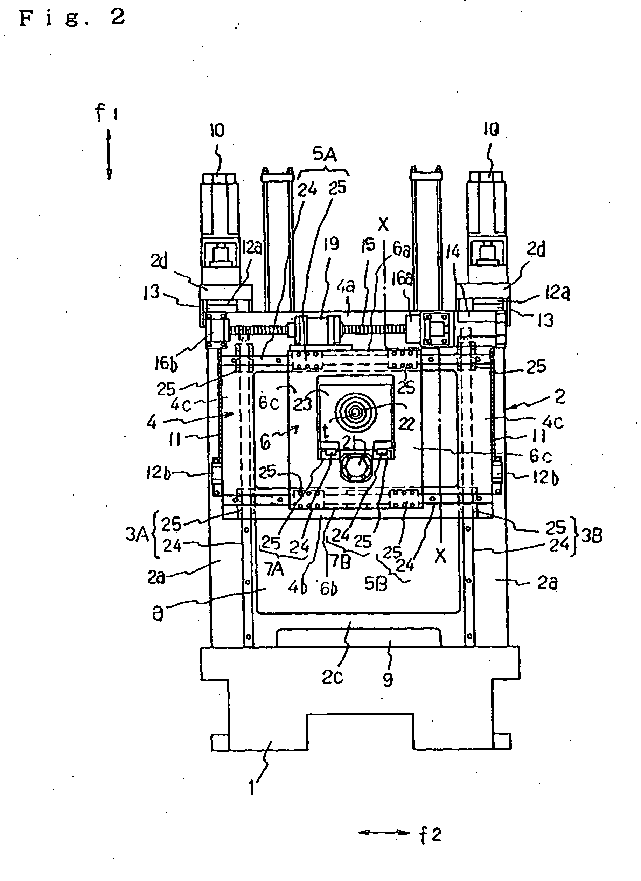

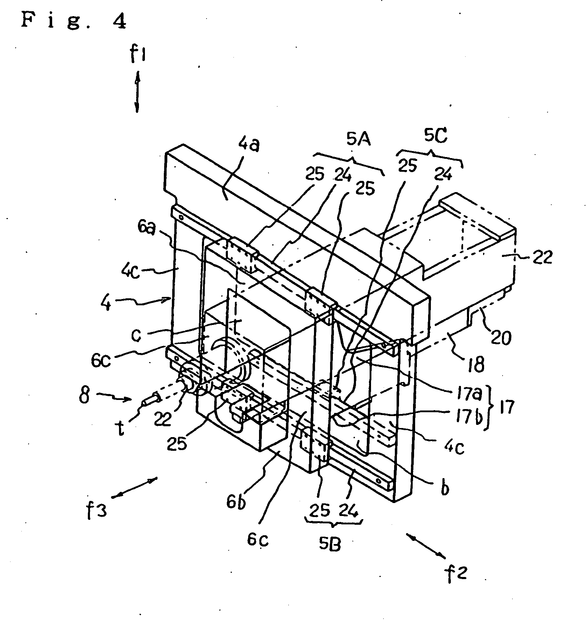

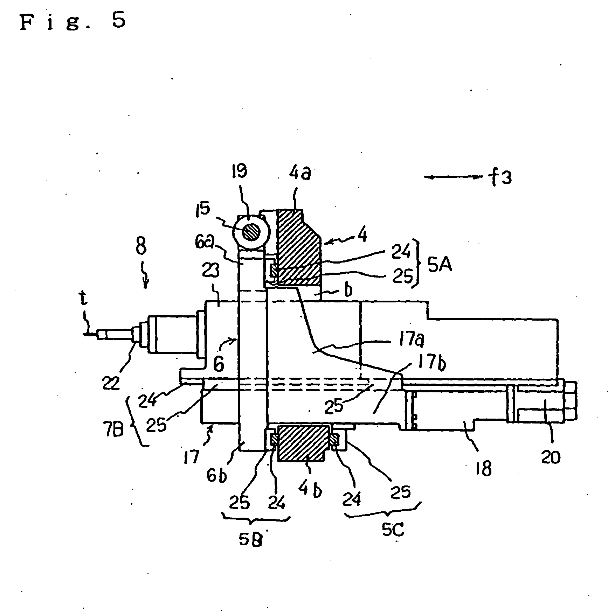

The second saddle 6, as shown in Figs. 4, 5, comprises one pair of right and left lateral parts 6a, 6b each having a rectangular cross-section and one pair of upper and lower vertical parts 6c, 6c each having a rectangular cross-section, consisting chiefly of a vertical rectangular frame body made of fettling steel having a longitudinal space "c" into which the spindle head 8 is inserted on its central inside. Besides, the size of the second saddle 6 at front sight is accepted in the front of the first saddle 4 and a spindle head supporting member 17 having right and left side surfaces 17a, 17a and a horizontal surface 17b is integrally provided to the rear lower position as shown in Fig. 2. Moreover, a motor-table 18 is fixed on the rear end surface of the supporting member 17 so as to extend backward, and a nut body 19 for receiving the lateral screw axis 15 is fixed on the top of the upper lateral part 6a.

A servomotor 20 for moving the spindle head 8 in longitudinal direction f3 is fixed on the rear end surface of the motor-table 18. A bearing member 21 for rotatively supporting a not-illustrated spindle longitudinal screw axis screwed in an output axis of the servomotor 20 is fixed on the front and rear positions in the center of the width of the horizontal surface part 17b as shown in Fig. 2.

The spindle head 8 has a head frame 23 for rotatively supporting a longitudinal spindle 22 and a not-illustrated driving motor for rotating the spindle 22 is provided thereinside. A not-illustrated nut body for receiving the spindle longitudinal screw axis is fixed on the middle of the longitudinal length in the center of the width of the head frame 23.

Next, an explanation follows about each of the guide route means 3A, 3B, 5A, 5B, 5C, 7A, 7B.

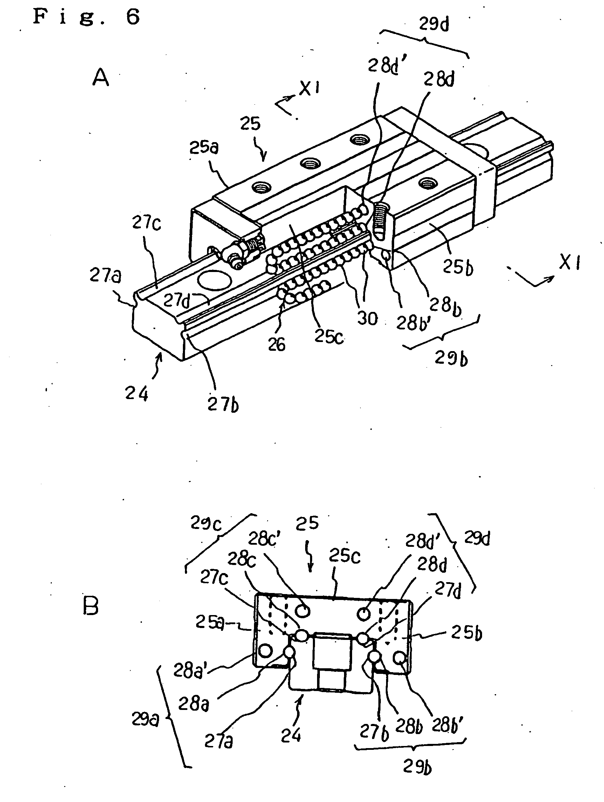

Any of the guide route means 3A, 3B, 5A, 5B, 5C, 7A, 7B is called a liner motion bearing and well known. As shown in Fig. 6, these comprise a straight route member 24, interfitting members 25, and engaging means 26, respectively. The interfitting members 25 slidably move with fitted in the route member 24. Besides, the engaging means 26 make possible smooth relative sliding of the route members 24 and the interfitting members 25, where separation of the route members 24 and the interfitting members 25 is restricted.

An explanation will follow about each component. A route member 24 is made a rail member having a rectangular cross-section, forming linear grooves 27a, 27b, 27c, 27d each having a semicircular cross-section on the upper positions of the right and left sides and the right and left end positions of the top thereof.

An interfitting member 25 is made a comparative short member having an angular C letter shape comprising right and left side parts 25a, 25b and a center part 25c. Here, the center part 25c combines the right side part 25a and the left side part 25b. Linear grooves 28a, 28b, 28c, 28d are formed on the insides of the side surface parts 25a, 25b and the center part 25c so as to be correspondent to the linear grooves 27a, 27b, 27c, 27d in this order respectively. Partial flat circular transfer passages 28a', 28b', 28c', 28d' are respectively provided to the linear grooves 28a, 28b, 28c, 28d to open both ends thereof. Here, the transfer passages 28a', 28b', 28c', 28d' are integrated with the linear grooves 27a, 27b, 27c, 27d and the linear grooves 28a, 28b, 28c, 28d to form closed flat circular passages 29a, 29b, 29c, 29d, respectively.

An engaging member 26 comprises a large number of spheres 30, and is fitly inserted in each of the closed flat circular passages 29a, 29b, 29c, 29d in a single line and closely in the state where the interfitting member 25 is fitted in the rail member 24.

In the guide route means 3A, the first rail member 24 is fixed on the front left end part of the column 2 in a vertical single line and the interfitting members 25 for being fitted in the first rail member 24 are fixed on the upper and lower positions of the left end part of the first saddle 4. In the guide route means 3B, the second rail member 24 is fixed on the front right end part the column 2 in a vertical single line and the interfitting members 25 for being fitted in the second rail member 24 are fixed on the upper and lower positions of the right end part of the first saddle 4. Here, the guide route means 3A, 3B move the first saddle 4 in vertical direction f1.

In the guide route means 5A, the third rail member 24 is fixed on the front of the upper lateral part 4a of the first saddle 4 in a lateral single line and the interfitting members 25 for being fitted in the third rail member 24 are fixed on the right and left end positions of the upper lateral part 6a of the second saddle 6. In the guide route means 5B, the fourth rail member 24 is fixed on the front of the lower lateral part 4b of the first saddle 4 in a lateral single line and the interfitting members 25 for being fitted in the fourth rail member 24 are fixed on the right and left end positions of the lower lateral part 6b of the second saddle 6. In the guide route means 5C, the fifth rail member 24 is fixed on the rear of the lower lateral part 4b of the first saddle 4 in a lateral single line and a single interfitting member 25 for being fitted in the fifth rail member 24 is fixed on a projecting part 17c provided to the bottom of the supporting member 17 of the second saddle 6. Here, the guide route means 5A, 5B, 5C move the second saddle 6 in lateral direction f2.

In the guide route means 7A, the sixth rail member 24 is fixed on the lower left end part of the head frame 23 in a longitudinal single line and the interfitting members 25 for being fitted in the sixth rail member 24 are fixed on the front and rear ends of the left end part of the top of the supporting member 17. In the guide route means 7B, the seventh rail member 24 is fixed on the lower right end part of the head frame 23 in a longitudinal single line and the interfitting members 25 for being fitted in the seventh rail member 24 are fixed on the front and rear ends of the upper right end part of the supporting member 17. Here, the guide route means 7A, 7B move the spindle head 8 in longitudinal direction f3.

The following not-illustrated architectures are added in order to form a machining center on the basis of the above-mentioned architectures. That is, there are provided a tool magazine for containing a large number of tools, an automatic tool exchanger for operating so as to receive a tool from the tool magazine and fitly insert it in the tip of the spindle 22 or conversely so as to pull it out the tip of the spindle 22 and put back it to the tool magazine, and an enclosure for covering the whole of structures on the bed 1 in accordance with the necessity.

Next an explanation will follow about an operation of the machine tool related to the invention. The first saddle 4 is moved in vertical direction f1 by rotation of the servomotor 10, 10, the second saddle 6 is moved in lateral direction f2 by rotation of the servomotor 14, and the spindle head 8 is moved in longitudinal direction f3 by rotation of the servomotor 20. Therefore, the spindle 22 can move toward an optional position of three-axis direction.

When the spindle 22 moves like this and a driving motor of a tool "t" fitly installed to the tip thereof rotatively operates, a work fixed on the not-illustrated worktable can be machined.

The first saddle 4 is guided and vertically moved by the first and the second rail members 24, 24 in the guide route means 3A, 3B and two upper and lower interfitting members 25, 25 fitted in these rail members 24, 24. In this case, since the vertical size and the horizontal size of the first saddle 4 are comparatively large, the first saddle 4 moves stably in the state where there is little inclination displacement due to component floating of the guide route means 3A, 3B.

Besides, the second saddle 6 is guided by the third and the fourth rail members 24, 24 in the guide route means 5A, 5B of the front of the first saddle 4 and two right and left interfitting members 25, 25 fitted in these rail members 24, 24. Simultaneously, the second saddle 6 is guided and laterally moved by the fifth rail member 24 in the guide route means 5C of the rear of the first saddle 4 and a single interfitting member 25 fitted in this rail member 24. In this case, since three parts of the second saddle 6 are guided by three guide route means 5A, 5B, 5C having proper intervals each other, the second saddle 6 moves stably in the state where inclination displacement of all direction due to component floating of the guide route means 5A, 5B, 5C is effectively prevented.

Moreover the spindle head 8 is guided and longitudinally moved by the sixth and the seventh rail members 24, 24 in the guide route means 7A, 7B and front and rear interfitting members 25, 25 fitted in these rail members 24, 24. In this case, the spindle head 8 moves stably in the state where inclination displacement due to component floating of the guide route means 7A, 7B is hard to happen by the self-weight.

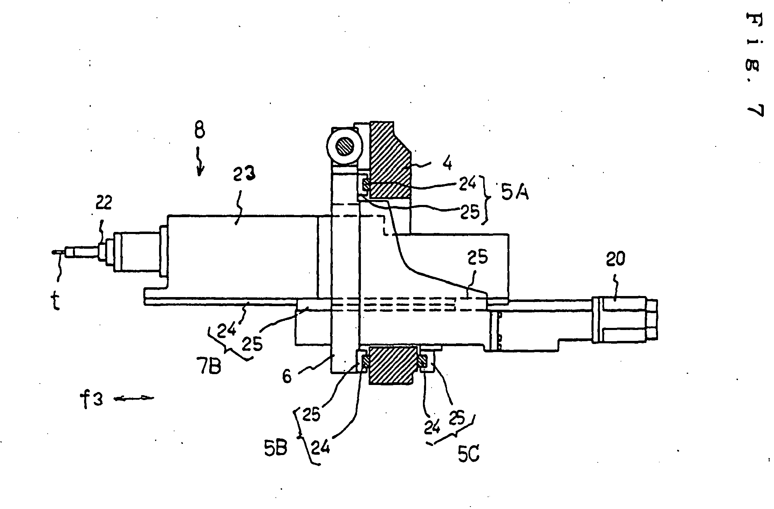

Besides, according to the machining situation of a work, the spindle head 8 may be greatly sent out forward to the second saddle 6 as shown in Fig. 7. In this case, in a longitudinal move process of the spindle head 8, the second saddle 6 obtains the moment for changing an action direction of force to reciprocal direction or to various sizes.

However, three guide route means 5A, 5B, 5C for guiding the second saddle 6 act so as to restrict the inclination displacement due to the moment effectively. That is, when the second saddle 6 tends to incline toward either side of front and rear, either of two guide route means 5B, 5C comes to approach the interfitting members 25 and the rail members 24. Therefore, the engaging means 26 come to counter very effectively to such displacement.

Such restriction in the inclination displacement of the second saddle 2 effectively prevents the spindle head 8 from vibrating, and enables a high-accurate machining.

The above-mentioned embodiment will be modified as follows.

Instead of providing a single interfitting member 25 on the center of the width of the projecting part 17c of the bottom of the supporting member 17, the interfitting members 25, 25 to be fitted in the seventh rail member 24 may be provided to the right and left end parts of the projecting part 17c respectively. According to this, the inclination displacement of the second saddle 6 due to the component floating is restricted more effectively in comparison with the case where a single interfitting member 25 is provided to the center of the width of the projecting part 17c.

Instead of providing the guide route means 5C to the rear lower position of the first saddle 4, the guide route means may be provided each of the rear upper and lower positions of the first saddle 4. According to this, the inclination displacement of the second saddle 6 due to the component floating is restricted more effectively in comparison with the case where the guide route means 5C only is provided to the rear of the first saddle 4.

The spheres 30 of the guide route means 3A, 3B, 5A, 5B, 5C, 7A, 7B may be altered to rollers. In this case, the closed flat circular passages 29a, 29b, 29c, 29d must be deformed in accordance with the rollers. According to this too, the same action as the case where it is based on the spheres 30 is obtained.

The rail members 24 of the guide route means 3A, 3B, 5A, 5B, 5C, 7A, 7B and the interfitting members 25 can also do the required action without the engaging means 26 such as the spheres 30 and the rollers. For example, the cross-section of interfitting member 25 is formed in inner-spread such as a C letter shape, and the rail members 24 are closely inserted into the inside space of the C letter shape. According to this too, the required guidance action is obtained by an adequate lubricating means.

### INDUSTRIALLY APPLICABLE UTILITY

According to the invention, the following effects can be obtained.

According to claim 1, the first saddle guides the second saddle through three guide route means. Besides, two opposite guide route means in longitudinal direction are strictly restricted the longitudinal floating by the second saddle part between these guide route means. Therefore, the second saddle can secure the position stability at the optional position within the lateral moving range, thereby preventing the spindle head from vibrating as well as enabling to carry out a high-accurate machining.

According to claim 2, when reinforcing the upper and lower parts of the second saddle as a spindle head supporting member, the supporting member effectively contributes as a supporting structure of two guide route means at the upper and lower positions of the first saddle, and effectively transfers floating control force due to two guide route means to the whole second saddle.

According to claim 3, the guide route means can be easily formed by well-known means. Besides, the second saddle can relatively slide on the first saddle through the route members and interfitting members in the state where the floating is restricted.

According to claim 4, the spindle head can stably move in the state where the inclination displacement due to the component floating of the guide route means is hard to occur because of its self weight. Therefore, vibrations of the spindle head are effectively prevented, thereby enabling to machine accurately.

## Claims

1. A machine tool, comprising
a bed (1),
a column (2) fixedly installed on said bed (1),
a first saddle (4) movably guided by said column (2) in vertical direction (f1),
a second saddle (6) movably guided by said first saddle (4) in lateral direction (f2), and
a spindle head (8) movably guided by said second saddle (6) in longitudinal direction (f3),
wherein guide route means for guiding the second saddle (6) in lateral direction (f2) are formed (5A, 5B) at the upper and lower front of the first saddle (4), and additionally either on the upper and lower rear of the first saddle (4) or at one (5C) of the upper and lower rear of the first saddle (4).

2. The machine tool according to claim 1,
wherein the guide route means (5A, 5B, 5C) are formed on the lower rear of the first saddle (4) and on the upper and lower front of the first saddle (4).

3. The machine tool as claimed in claim 1 or 2, wherein the guide route means (5A, 5B, 5C) comprise route members (24) fixed on the first saddle (4) or the second saddle (6) and interfitting members (25) slidably displaced with fitted in the route members (24), the interfitting members (25) are fixed on either the second saddle (6) when the route members (24) are fixed on the first saddle (4) or the first saddle (4) when the route members (24) are fixed on the second saddle (6).

4. The machine tool as claimed in claim 1 or 2, wherein the guide route means (5A, 5B, 5C) comprise route members (24) and interfitting members (25) slidably displaced with fitted in the route members (24), two route members (24) are fixed on the front upper and lower positions of the first saddle (4), a plurality of interfitting members (25) fixed on the second saddle (6) are fitted in these route members (24), and besides, a route member (24) is fixed on the rear lower position of the first saddle (4), and a singular or plural interfitting members (25) fixed on the second saddle (6) are fitted in said route member (24).

## Patentansprüche

1. Werkzeugmaschine, mit
einem Bett (1),
einer Säule (2), die fest auf dem Bett (1) installiert ist,
einem ersten Sattel (4), der durch die Säule (2) in vertikaler Richtung (f1) bewegbar geführt ist, einem zweiten Sattel (6), der durch den ersten Sattel (4) in seitlicher Richtung (f2) bewegbar geführt ist, und
einem Spindelkopf (8) der durch den zweiten Sattel (6) in Längsrichtung (f3) bewegbar geführt ist,
wobei Führungswegmittel zum Führen des zweiten Sattels (6) in seitlicher Richtung (f2) an der oberen und unteren Vorderseite des ersten Sattels (4) ausgebildet sind (5A, 5B) und zusätzlich entweder an der oberen und der unteren Rückseite des ersten Sattels (4) oder an einer (5C), der oberen oder der unteren, Rückseite des ersten Sattels (4) ausgebildet sind.

2. Werkzeugmaschine nach Anspruch 1,
bei der die Führungswegmittel (5A, 5B, 5C) an der unteren Rückseite des ersten Sattels (4) und an der oberen und der unteren Vorderseite des ersten Sattels (4) ausgebildet sind.

3. Werkzeugmaschine nach Anspruch 1 oder 2, bei der die Führungswegmittel (5A, 5B, 5C) Wegbauteile (24), die an dem ersten Sattel (4) oder an dem zweiten Sattel (6) befestigt sind, und dazu passende Bauteile (25), die gleitend verschiebbar mit den Wegbauteilen (24) zusammengesetzt sind, aufweisen, wobei die dazu passenden Bauteile (25) entweder an dem zweiten Sattel (6) befestigt sind, wenn die Wegbauteile (24) an dem ersten Sattel (4) befestigt sind, oder an dem ersten Sattel (4) befestigt sind, wenn die Wegbauteile (24) an dem zweiten Sattel (6) befestigt sind.

4. Werkzeugmaschine nach Anspruch 1 oder 2, bei der die Führungswegmittel (5A, 5B, 5C) Wegbauteile (24) und dazu passende Bauteile (25), die gleitend verschiebbar mit den Wegbauteilen (24) zusammengesetzt sind, aufweisen, wobei zwei Wegbauteile (24) an der vorderen oberen und unteren Position des ersten Sattels (4) befestigt sind, eine Mehrzahl von dazu passenden Bauteilen (25), die an dem zweiten Sattel (6) befestigt sind, mit diesen Wegbauteilen (24) zusammengesetzt sind, und außerdem ein Wegbauteil (24) an der hinteren unteren Position des ersten Sattels (4) befestigt ist, und ein einziges oder mehrere dazu passende Bauteile (25), das/die an dem zweiten Sattel (6) befestigt ist/sind, mit dem Wegbauteil (24) zusammengesetzt ist/sind.

## Revendications

1. Machine-outil, comprenant
un bâti (1),
une colonne (2) installée fixement sur ledit bâti (1), une première selle (4) de cadre rectangulaire guidée d'une manière mobile par ladite colonne (2) dans une direction verticale (f1),
une seconde scelle (6) de cadre rectangulaire guidée d'une manière mobile par ladite première selle (4) dans une direction latérale (f2), dans une plage d'une largeur de la première selle (4), une largeur de la seconde selle étant plus petite que celle de la première selle; et
une tête de broche (8) guidée d'une manière mobile à l'intérieur de ladite seconde selle (6) dans la direction longitudinale (f3),
où des moyens de chemin de guidage pour guider la seconde selle (6) dans la direction latérale (f2) sont formés (5A,5B) à l'avant supérieur et inférieur de la première selle (4), et **caractérisée par** des moyens de chemin de guidage additionnels pour guider la seconde selle (6) soit sur l'arrière supérieur et inférieur de la première scelle (4) soit à l'un (5C) de l'arrière supérieur et inférieur de la première selle (4).

2. Machine-outil selon la revendication 1, où les moyens de chemin de guidage (5A,5B,5C) sont formés sur l'arrière inférieur de la première scelle (4) et sur l'avant supérieur et inférieur de la première scelle (4).

3. Machine-outil selon la revendication 1 ou 2, où les moyens de chemin de guidage (5A,5B,5C) comprennent des éléments de chemin (24) fixés sur la première selle (4) ou la seconde selle (6) et des éléments d'ajustement (25) déplacés d'une manière coulissante en étant ajustés dans les éléments de chemin (24), les éléments d'ajustement (25) sont fixés soit sur la seconde selle (6) lorsque les éléments de chemin (24) sont fixés sur la première selle (4), soit sur la première selle (4) lorsque les éléments de chemin (24) sont fixés sur la seconde selle (6).

4. Machine-outil selon la revendication 1 ou 2, où les moyens de chemin de guidage (5A,5B,5C) comprennent des éléments de chemin (24) et des éléments d'ajustement (25) déplacés d'une manière coulissante en étant ajustés dans les éléments de chemin (24), deux éléments de chemin (24) sont fixés aux positions supérieure et inférieure avant de la première selle (4), plusieurs éléments d'ajustement (25) fixés sur la seconde selle (6) sont ajustés dans ces éléments de chemin (24), et par ailleurs un élément de chemin (24) est fixé à la position inférieure arrière de la première selle (4), et un seul ou plusieurs éléments d'ajustement (25) fixés sur la seconde selle (6) sont ajustés dans ledit élément de chemin (24).
